# EUROPEAN PATENT APPLICATION

(11) **EP 3 184 273 A1**
(43) Date of publication of application: **28.06.2017**
(21) Application number: 15290329.0
(22) Date of filing: 22.12.2015
(51) Int. Cl.: B28C 7/06, B01F 15/02, B28C 5/40, B65D 65/46, C04B 16/06, E04C 5/07

(54) **BAG FOR CONTAINING POWDERY SUBSTANCES**

(71) Applicant: Lafarge, 75116 Paris (FR)
(72) Inventor: XENOPOULOS, Constantinos, FR-69100 Villeurbanne (FR)
(74) Representative: Keschmann, Marc

(57) **Abstract**

A bag for containing powdery substances, in particular hydraulic cementing materials such as cement, wherein said bag is made from a water-disintegrable or water-soluble material (1) and comprises an element (5) storing reinforcement fibres, wherein said element (5) is adapted to release the reinforcement fibres upon its disintegration or dissolution in contact with water.

## Description

The invention refers to a bag, also referred to as a sack in the packaging industry, for containing powdery substances, in particular hydraulic cementing materials such as cement, wherein said bag is made from a water-disintegrable or water-soluble material.

The invention further refers to a method of producing a wet concrete mix containing reinforcement fibres, comprising charging water, aggregates, reinforcement fibres and at least one cement bag filled with cement into a concrete mixer.

Water-soluble bags for cement comprising one or more water-soluble layers, such as a layer of paper, which may disintegrate, are known. The main objective related to the use of this type of bags is to avoid generating waste on the production site and avoid direct contact with the cement contained in the bag. The bags may be charged into a concrete mixer without having been opened. The bags will disintegrate or dissolve once they come into contact with the water contained in the concrete mixer and the cement is released into the mixture.

Further, WO 2013/050370 A1 discloses water-disintegrable cement bags that are used to provide an admixture for a hydraulic composition. Specifically, the admixture is comprised in the wall of the bag and is water-soluble. The admixture may be dispersed in a layer forming the bag. The water-soluble polymer may be a polyvinyl alcohol, which functions as an air-entraining agent or a clay-inerting agent. Once in contact with the water present in the concrete mixer, the bag, including the bag layer containing the admixture, is dissolved and the admixture is released into the wet concrete mix.

Polypropylene and other types of fibres are commonly used to increase the ductility and tensile strength of concrete. They are also claimed to reduce early age cracking. They are supplied either in bulk or in pre-weighed ready-to-use soluble pouch formats, usually added during the production of fresh concrete. The main drawbacks of this procedure is that the reinforcement fibres have to be stored separately and that their addition requires a separate step to measure the quantity of fibres before they are added to the mix.

The invention seeks to overcome said drawbacks and to provide a new means of supplying reinforcement fibres to fresh concrete.

According to a first aspect of the invention, a bag is provided that is made from a water-disintegrable or water-soluble material and comprises an element storing reinforcement fibres, wherein said element is adapted to release the reinforcement fibres upon its disintegration or dissolution in contact with water.

The present invention seeks to provide one or more of the advantages listed below:
- the use of a water-soluble bag makes it possible to avoid problems of dust related to the handling of pulverulent materials, in particular hydraulic binders. The bags may be handled, without being opened. Consequently, the user will not need to handle the pulverulent material, which could disperse very easily in the air.
- the water-soluble bags make it possible to simplify the handling of packaging waste on jobsites. The bags are used in totality for the production of hydraulic compositions, so that there is no packing waste.
- the specific nature of the water-soluble bag can provide better protection of a particulate material, and in particular of hydraulic binders, against gases (for example oxygen or carbon dioxide). This improved protection makes it possible to consider longer storage times. Protection against oxygen also makes it possible to avoid aging of the compounds (chromium VI reducing agents) used to reduce chromium VI in the hydraulic binders. This makes it possible to reduce the necessary quantity of the chromium VI reducing agents.
- handling of the pulverulent materials on jobsites is improved. Handling is first of all simplified, because the water-soluble bag containing a particulate material is used as such in the concrete mixer. It is therefore no longer necessary to open the bag before use. Then, its ergonomics improve since it is no longer necessary to use a shovel to load the particulate material into the concrete mixer.
- the addition of reinforcement fibres can be improved.
   In existing fibre admixing units, if several different fibre types are used, it is necessary to provide separate storage means, for example silos. However, silos take up a lot of space and require technical means to handle the fibres. In contrast, it is possible to provide several different fibre types with the bags according to the present invention. Different types of bags may be provided depending on the desired type of fibres. The presence of several silos can thus be avoided. Further, the dosing of fibres is improved, since a pre-determined amount of fibres is contained in the fibre storage element that is comprised with the bag, said amount of fibres being adapted to the amount of powdery substances contained in the bag. In this way a pre-determined ratio of reinforcement fibres and powdery substances is achieved in a simple and efficient way.

The invention may be used in, for example the building industry, the cement industry or concrete mixing plants.

According to a second aspect of the invention, the invention relates to a method of producing a hydraulic composition, such as a wet concrete mix, containing reinforcement fibres, comprising charging water, aggregates, reinforcement fibres and at least one cement bag filled with cement into a concrete mixer, wherein the reinforcement fibres are contained in a water disintegrable storage element that is placed in or on the cement bag so that the reinforcement fibres are introduced into the mixer together with the cement bag, further comprising mixing the charged components while disintegrating and/or dissolving the cement bag and the storage element in the mixer so as to release the cement and the reinforcement fibres into the material mix and obtaining a wet concrete mix.

A hydraulic composition generally comprises a hydraulic binder, water, aggregates and optionally admixtures. The aggregates include coarse aggregates and/or sand. They may be a mineral or an organic material. They may also be of wood or recycled materials or with a base of waste material. A sand is generally an aggregate having a particle size less than or equal to 4 mm. Coarse aggregates are generally aggregates having a particle size greater than 4 to, for example, 20 mm.

A hydraulic binder comprises any compound, which sets and hardens by hydration reactions. The hydraulic binder comprises, for example cement, plaster or hydraulic lime. Preferably, the hydraulic binder is a cement.

According to the invention, the bag comprises an element storing reinforcement fibres. The element that stores or comprises the reinforcement fibres may be in any form that is adapted to release the reinforcement fibres upon its disintegration or dissolution in contact with water.

Preferably, the element is a water-disintegrable fibre mat. In particular, the fibre mat may comprise reinforcement fibres bonded together by means of a water-soluble binder.

The fibre mat may also be a nonwoven fabric made of said reinforcement fibres. The nonwoven fabric may constitute a layer, in particular an inner layer, of a multi-layer wall of the bag.

Preferably, the reinforcement fibres may be integrated into a wall or a wall layer of the bag. The fibres may for example be dispersed within the material of the wall or of at least one wall layer of the bag. Alternatively, the reinforcement fibres may be applied to a surface of a wall or of a wall layer of the bag, such as, e.g., by bonding to the wall or the wall layer.

In this way, the reinforcement fibres enhance the mechanical properties of the bag, such as the mechanical stability, in particular the tearing and breaking resistance, when the bag is in a dry state. Only when in contact with water, such as after having been charged into a mixer, the bag material will disintegrate or dissolve and the reinforcement fibres integrated or comprised in the wall of the bag will be released into the mixture, as well as the powdery substance contained in the bag.

According to another preferred embodiment, the element is a closed container, such as a pouch or a flexible package, which contains the reinforcement fibres.

Preferably, the bag comprises at least two layers. In such an embodiment the element storing the reinforcement fibres may be arranged between said at least two layers.

Preferably, the element storing the reinforcement fibres may be fixed to the bag, in particular to a wall, such as an exterior wall, of the bag.

The reinforcement fibres may be made of any fibrous material that contributes to increasing the structural integrity, in particular the strength, the impact resistance and/or the durability, of the resulting concrete 0structure. Fibre-reinforced concrete contains short discrete reinforcement fibres that are uniformly distributed and randomly oriented.

Preferably, the reinforcement fibres are synthetic fibres, in particular polypropylene fibres. Alternatively, the reinforcement fibres may be steel fibres, glass fibres, or natural fibres.

According to a preferred embodiment of the invention, the bag is made of a water-soluble material, such as paper, in particular kraft paper. Preferably, the bag comprises at least one bag wall that is made of or comprises paper, in particular kraft paper, that is reinforced by the reinforcement fibres, whereby said bag wall constitutes the element storing the reinforcement fibres.

The bag used according to the invention is generally a bag, the material of which is sufficiently resistant to make it possible to fill the bag with a particulate material, to handle and transport the filled bag, and at the same time have a nature and a structure such that it dissolves, disperses or disintegrates in water, preferably rapidly, during the production of a hydraulic composition. Preferably, the bag dissolves, disperses or disintegrates in water at a pH greater than or equal to 7 and by the effect of mechanical mixing. The difference between the solubility and the disintegrability is that, in the second case, small pieces of the bag remain intact (for example particles or fibres), but do not have significant negative effects when the hydraulic composition is used. A disintegrable bag is generally made of a material, which loses its cohesion during the mixing.

Preferably, the bag used according to the present invention comprises one or more characteristics selected from the following list:
- sufficient mechanical properties to contain5 to 25 kg of particulate materials;
- cold solubilisation, which is to say not requiring heating;
- solubilisation at a pH greater than or equal to 7 by the effect of a mixing action,
- sufficient water-repellency of the external layer or exterior of the bag to make the bag substantially resistant or inert to water;
- sufficient impermeability to gases, for example to oxygen in the air and to carbon dioxide. This impermeability is in particular important during the storage time of the bags, in order to reduce or limit to a maximum the degradation of the particulate materials contained in the bag.

Preferably, the bag has all the characteristics listed above.

Preferably, the dissolution of the bag takes place or is carried out in less than 70 revolutions of the blade in a concrete mixer.

Preferably, at least 80% by mass of the bag is dissolved after 10 minutes, more preferably after 6 minutes of mixing.

Preferably, the dissolution of the bag takes place or is carried out in less than five minutes, more preferably in less than four minutes of mixing.

Preferably, the total thickness of the wall of the bag is greater than or equal to 75 µm, more preferably greater than or equal to 100 µm.

Preferably, the total thickness of the wall of the bag is less than or equal to 500 µm, more preferably less than or equal to 400 µm, most preferably less than or equal to 200 µm.

It is possible to print on the bag, for example to identify the product contained inside the bag.

According to an embodiment of the present invention, it is possible to make several small water-soluble bags and to place them inside a larger sized bag, the larger sized bag being preferably recyclable. In particular, this embodiment presents the advantage of a more precise dosage of the particulate materials when the entire bag is not necessary, and the possibility of keeping the un-used particulate materials for a longer time. The un-used small water-soluble bags provide better protection of the particulate material contained inside the bags, because the particulate material is not stored in the open air.

According to another embodiment of the present invention, the small water-soluble bags may be placed inside a solid container, for example a case. In particular, this embodiment presents the advantage of improved rigidity of the container, which therefore provides better protection of the bags during handling and storage.

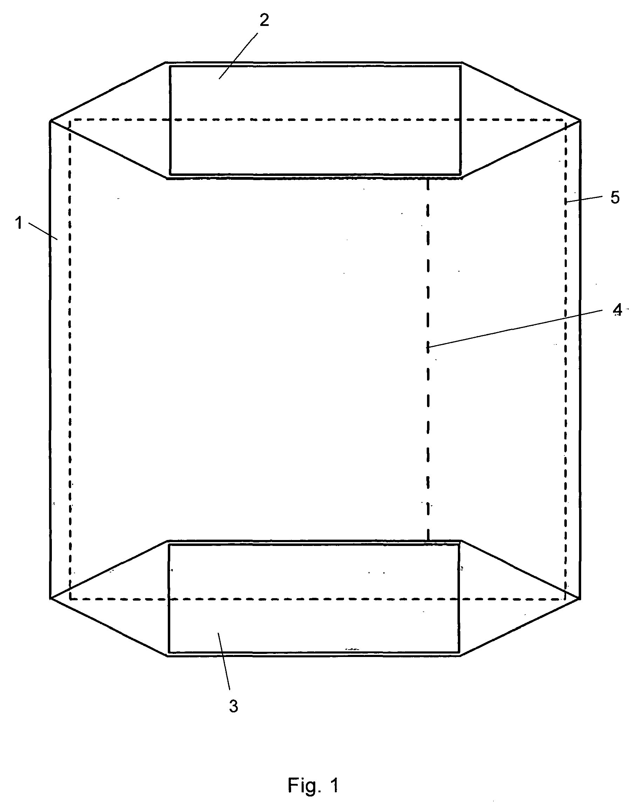

The invention will now be described in more detail with reference to the attached figure. Fig. 1 illustrates a possible embodiment of the invention.

Fig. 1 shows a paper bag for containing powdery substances, such as cement. The bag comprises a wall 1 made of kraft paper, wherein the wall 1 is produced from a tube of paper, that is obtained by joining together the opposite edges of a paper web along the longitudinal seam 4. The bottom and the top of the bag are folded from the wall tube in order to obtain a block bottom bag. A valve may be integrated into the bottom. Bottom patches 2 and 3 are applied to the folded bottom and top parts.

The wall 1 of the bag is configured as a double-layer wall and comprises an external ply and an internal ply. At least one flat fibre mat sheet 5, preferably two or more fibre mat sheets 5 lying upon each other, are arranged between the external and the internal plies of the bag.

The wall 1 of the bag consists of water-disintegrable kraft paper that disintegrates in contact with water when being exposed to the mechanical forces of the concrete mixer. In the mixer, the fibre mat sheets 5 also get into contact with water and dissolve, so that the reinforcement fibres, from which the fibre mat sheet is made, are released into the fresh concrete mixture.

## Claims

1. A bag for containing powdery substances, in particular hydraulic cementing materials such as cement, wherein said bag is made from a water-disintegrable or water-soluble material and comprises an element storing reinforcement fibres, wherein said element is adapted to release the reinforcement fibres upon its disintegration or dissolution in contact with water.

2. A bag according to claim 1, **characterised in that** the element is a water-disintegrable fibre mat.

3. A bag according to claim 2, **characterised in that** the fibre mat comprises reinforcement fibres bonded together by means of a water-soluble binder.

4. A bag according to claim 2 or 3, **characterised in that** the fibre mat is a nonwoven fabric made of said reinforcement fibres.

5. A bag according to any one of claims 1 to 4, **characterised in that** the reinforcement fibres are integrated into a wall or a wall layer of the bag or are applied to a surface of a wall or of a wall layer of the bag.

6. A bag according to claim 1, **characterised in that** the element is a closed container, such as a pouch or a flexible package, which contains the reinforcement fibres.

7. A bag according to any one of claims 1 to 6, **characterised in that** the bag comprises at least two layers.

8. A bag according to claim 7, **characterised in that** the element is arranged between said at least two layers.

9. A bag according to any one of claims 1 to 7, **characterised in that** the element is fixed to the bag, in particular to a wall, such as an exterior wall, of the bag.

10. A bag according to any one of claims 1 to 9, **characterised in that** the reinforcement fibres are polypropylene fibres.

11. A bag according to any one of claims 1 to 10, **characterised in that** the bag is made of a water-soluble material, such as paper, in particular kraft paper.

12. A method of producing a wet concrete mix containing reinforcement fibres, comprising charging water, aggregates, reinforcement fibres and at least one cement bag filled with cement into a concrete mixer, wherein the reinforcement fibres are contained in a water-disintegrable or water-soluble storage element that is placed in or on the cement bag so that the reinforcement fibres are introduced into the mixer together with the cement bag, further comprising mixing the charged components while disintegrating and/or dissolving the cement bag and the storage element in the mixer so as to release the cement and the reinforcement fibres into the material mix and obtaining a wet concrete mix.

13. A method according to claim 12, **characterised in that** the cement bag is a bag according to any one of claims 1 to 10.
